# EUROPEAN PATENT APPLICATION

(11) **EP 3 731 085 A1**
(43) Date of publication of application: **28.10.2020**
(21) Application number: 19171205.8
(22) Date of filing: 25.04.2019
(51) Int. Cl.: G06F 9/445, G06F 21/51, G06F 3/01

(54) **MOBILE DEVICE WITH A SHARED DATA STRUCTURE AND METHOD FOR OPERATING THE SAME**

(71) Applicant: XRSpace CO., LTD., Taoyuan City 330 (TW)
(72) Inventor: Huang, Chi-Yang, 711 Tainan City (TW)
(74) Representative: Straus, Alexander

(57) **Abstract**

A mobile device (100) includes a shared memory (106) . The shared memory (106) preloads a plurality of objects (112) from a library (104) before an application (108) needs an object (114) within the plurality of objects (112). The shared memory (106) is a volatile memory. When an application (108) needs the object (114) within the plurality of objects (112), the application (108) accesses the object (114) prestored in the shared memory (106) .

## Description

### Field of the Invention

The present disclosure related to a mobile device, more particularly, to a mobile device with a shared data structure.

### Background of the Invention

An operator of a mobile device (for example, a cell phone or a head mounted display) usually launches a system development kit (SDK) for the developers to create their own applications compatible with the mobile device. In these applications, some software assets are similar or substantially the same.

The first known method is building the same software assets into individual applications before these applications are downloaded or updated. In detail, when an application or an updated version of an application is released, all related software assets are already built into the application or the updated version of the application. Then the application can be launched in an application store platform for users to download or update. Different applications using the same software assets have the same software assets built in (for example, a virtual reality tree, car, etc.), causing a large size of each application.

The second known method is loading software assets into a memory of the mobile device repeatedly for different applications. In detail, when two different applications need the same software asset in the mobile device, it will load the same software asset to the memory twice. That is, the memory of the mobile device will have N software assets for N different applications, wherein the N software assets are substantially the same.

Both the first and second known methods cause large data transmission and memory space usage of the hard disk. Therefore, the mobile device may spend a lot of time for data transmission, the operating system performance may go down because of too many data accesses, and network bandwidth of the network provider may always be occupied.

### Summary of the Invention

The present invention aims at providing a method for data sharing on a mobile device with a shared memory.

This is achieved by a mobile device and method according to the independent claims here below. The dependent claims pertain to corresponding further developments and improvements.

As will be seen more clearly from the detailed description following below, the claimed mobile device for data sharing comprises a shared memory preloading a plurality of objects from a library before an application needs an object within the plurality of objects, wherein the shared memory is a volatile memory, and when an application needs the object within the plurality of objects, the application accesses the object prestored in the shared memory.

The claimed method comprises preloading a plurality of objects from a library to a shared memory of the mobile device before an application needs an object within the plurality of objects, providing the object prestored in the shared memory to the application when the application needs the object, and wherein the shared memory is a volatile memory.

It is an advantage that the present invention shared memory preloads the plurality of objects before the applications need them. When the object is in need, the shared memory provides multiple and simultaneous access rights for different applications. The applications can directly access the object preloaded in the shared memory, that is, the shared memory does not have to access the object from the library again. Therefore, the data transmission amount and the memory space usage can be reduced, the transmission time can be saved and the network bandwidth of the network provider can be free from being occupied, especially when the object is a basic object, such as an avatar or a virtual object, and used in most of the applications.

### Brief Description of the Drawings

In the following, the invention is further illustrated by way of example, taking reference to the accompanying drawings:
FIG.1 shows a mobile device according to an embodiment of the present disclosure; and
FIG.2 is a flowchart of a method of operating the mobile device and/or the remote computing device in FIG.1.

### Detailed Description

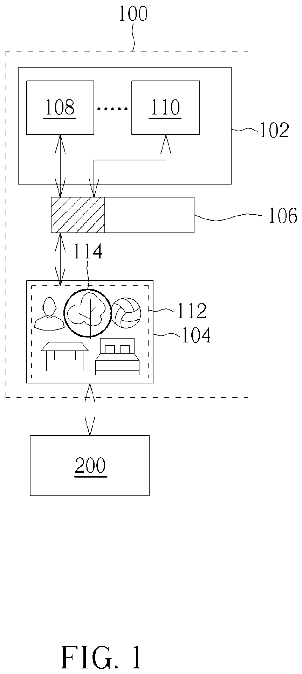

FIG.1 shows a mobile device 100 and a remote storage device 200 according to an embodiment of the present disclosure. The mobile device 100 comprises an operating system 102, a library 104, a shared memory 106 and applications 108, 110 capable of running on the operating system 102 of the mobile device 100. The mobile device 100 is coupled to the remote storage device 200, wherein the remote storage device 200 can store, for example, a plurality of objects 112. The library 104 of the mobile device 100 can download and store the plurality of objects 112 from the remote storage device 200. Then, the shared memory 106 can preload an object 114 within the plurality of objects 112 from the library 104. Then, the applications 108, 110 can access the object 114 preloaded in the shared memory 106 directly.

The library 104 can stored in a volatile memory or a non-volatile memory. For example, the non-volatile memory can be a read-only memory (ROM), a flash memory, a hard disk, a disc or a tape. The shared memory 106 is a volatile memory, for example, a random-access memory (RAM), wherein the RAM can be a dynamic random-access memory (DRAM) or a static random-access memory (SRAM). In contrast to the non-volatile memory, the volatile memory is computer memory that requires power to maintain the stored information, that is, the volatile memory retains its contents while powered on but may quickly lost its stored data when the power is interrupted.

In this embodiment, the number of the applications 108, 110 is two. However, the number of the applications of the present disclosure is not limited thereto. The plurality of objects 112 can include an avatar and virtual objects, for example, a group of a virtual tree, a virtual volleyball, a virtual house and a virtual bed. The plurality of objects 112 can be used in an augmented reality (AR) scene, a virtual reality (VR) scene, a mixed reality (MR) scene or the like. The object 114 can be the virtual tree. The remote storage device 200 can be a cloud computing server, an edge computing server, a local server, a personal computer, a mobile device, a universal serial bus (USB) hard disk, or a USB flash, etc.

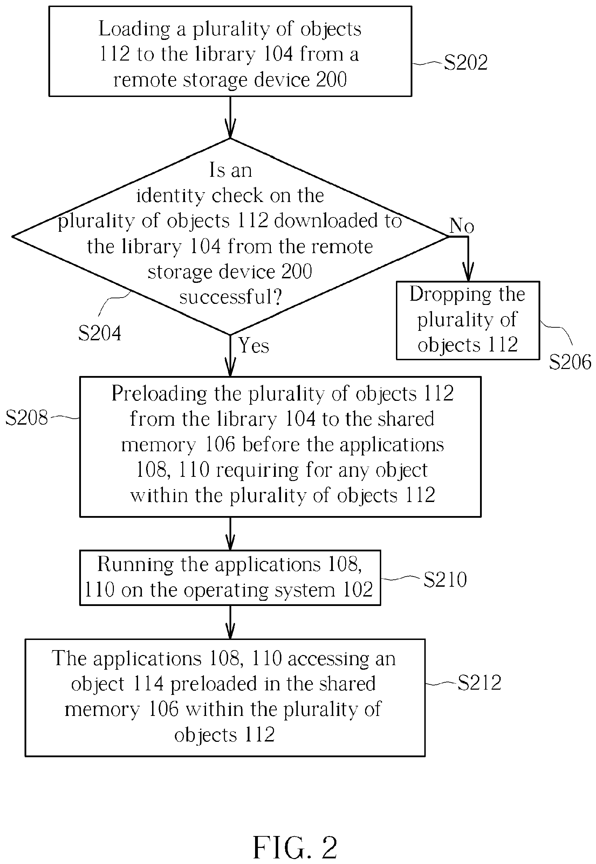

FIG. 2 is a flowchart of a method of operating the mobile device 100 and the remote storage device 200 in FIG. 1. The method may comprise the following steps:
Step S202: loading a plurality of objects 112 to the library 104 from a remote storage device 200;
Step S204: performing an identity check on the plurality of objects 112 downloaded to the library 104 from the remote storage device 200 successful; if so, go to Step S208; else go to Step S206;
Step S206: dropping the plurality of objects 112.
Step S208: preloading the plurality of objects 112 from the library 104 to the shared memory 106 before the applications 108, 110 requiring for any object within the plurality of objects 112;
Step S210: running the applications 108, 110 on the operating system 102; and
Step S212: the applications 108, 110 accessing an object 114 preloaded in the shared memory 106 within the plurality of objects 112.

The method is not limited to the above sequence, for instance, Steps S210 may be performed before Step S202. Further, S202, S204, S206 and S210 can be omitted or modified according to actual needs.

In Step S208, the plurality of objects 112 is preloaded before the applications 108, 110 requiring for any object within the plurality of objects 112. For example, the shared memory 106 preloads the plurality of objects 112 when the mobile device 100 is rebooted. For another example, the shared memory 106 preloads the plurality of objects 112 when an application, run before the applications 108, 110, requires for any object within the plurality of objects 112.

Obviously, Step S208 is not disclosed by the first and second known method described in the prior art. In Detail, in the first known method, since the plurality of objects may be installed in the individual applications initially, there is no need for the individual applications to access any object within the plurality of objects from the library. Neither, in the second known method, the applications may have to load the object and its copies from the library multiple times because of the lack of the shared memory.

In Step S212, the applications 108, 110 access the object 114 preloaded in the shared memory 106 within the plurality of objects 112. The object 114 can be accessed by the applications 108, 110 from the shared memory 106 simultaneously. Therefore, it is possible that the access time for the applications 108, 110 completely accessing the object 114 can be reduced.

In an embodiment, the remote storage device 200 can periodically update the library 104 with new objects and renewed objects and fix issues in the library 104.

In an embodiment, a library can be disposed in a remote storage device, rather than a mobile device.

In short, the present disclosure provides a shared memory. The shared memory preloads the plurality of objects before the applications need them. Then, when the object is in need, the shared memory provides multiple and simultaneous access rights for different applications. The applications can directly access the object preloaded in the shared memory, that is, the shared memory does not have to access the object from the library again. Therefore, it is possible that the data transmission amount and the memory space usage can be reduced, the transmission time can be saved and the network bandwidth of the network provider can be free from occupied, especially when the object is a basic object, such as an avatar or a virtual object, and used in most of the applications.

## Claims

1. A mobile device (100) for data sharing, **characterised by** comprising:
a shared memory (106) preloading a plurality of objects (112) from a library (104) before an application (108) needs an object (114) within the plurality of objects (112);
wherein the shared memory (106) is a volatile memory, and when an application (108) needs the object (114) within the plurality of objects (112), the application (108) accesses the object (114) prestored in the shared memory (106) .

2. The mobile device (100) of claim 1, **characterised in that** the library (104) is stored in a non-volatile memory of the mobile device (100), and the plurality of objects (112) are downloaded from a remote storage device (200) to the library (104) .

3. The mobile device (100) of claim 2, **characterised in that** identity checks are performed on the plurality of objects (112) downloaded to the library (104).

4. The mobile device (100) of any of the preceding claims, **characterised in that** the library (104) is stored in a remote storage device (200).

5. The mobile device (100) of any of the preceding claims, **characterised in that** the plurality of objects (112) is loaded from the library (104) to the shared memory (106) when the mobile device (100) is rebooted.

6. The mobile device (100) of any of claims 1-4, **characterised in that** the plurality of objects (112) is loaded from the library (104) to the shared memory (106) when any object of the plurality of objects (112) is first required by a running application (108).

7. The mobile device (100) of any of the preceding claims, **characterised in that** the mobile device (100) is a head mounted display.

8. A method for data sharing, **characterised by** comprising:
preloading a plurality of objects (112) from a library (104) to a shared memory (106) of the mobile device (100) before an application (108) needs an object (114) within the plurality of objects (112); and
providing the object (114) prestored in the shared memory (106) to the application (108) when the application (108) needs the object;
wherein the shared memory (106) is a volatile memory.

9. The method of claim 8, **characterised in that** the library (104) is stored in a non-volatile memory of the mobile device (100), and the plurality of objects (112) are downloaded from a remote storage device (200) to the library (104).

10. The method of claim 9, **characterised by** further comprising performing an identity check on the plurality of objects (112) .

11. The method of any of claims 8-10, **characterised in that** the library (104) is stored in a remote storage device (200).

12. The method of any of claims 8-11, **characterised by** further comprising loading the plurality of objects (112) from the library (104) to the shared memory (106) when the mobile device (100) is rebooted.

13. The method of any of claims 8-11, **characterised by** further comprising loading the plurality of objects (112) from the library (104) to the shared memory (106) when any object of the plurality of objects (112) is first required by a running application (108).

14. The method of any of claims 8-13, **characterised in that** the mobile device (100) is a head mounted display.
